# FASCICULE DE BREVET EUROPEEN

(11) **EP 3 225 360 B1**
(45) Date de publication et mention de la délivrance du brevet: **29.07.2020**
(21) Numéro de dépôt: 17154097.4
(22) Date de dépôt: 01.02.2017
(51) Int. Cl.: B25B 23/14, B25B 15/00

(54) **ACCESSOIRE DE SERRAGE AU BON COUPLE**
ZUBEHÖRTEIL FÜR DAS ANZIEHEN IM RICHTIGEN DREHMOMENT
ITEM FOR TIGHTENING TO THE CORRECT TORQUE

(30) Priorité: 29.03.2016 FR 1652678
(43) Date de publication de la demande: 04.10.2017
(73) Titulaire: Schneider Electric Industries SAS, 92500 Rueil-Malmaison (FR)
(72) Inventeur: VANZETTO, Daniel, 38050 GRENOBLE (FR)
(74) Mandataire: Colette, Marie-Françoise

(56) Documents cités:
- EP-A1- 2 842 694
- EP-A1- 2 903 015
- DE-A1- 4 309 198
- US-A1- 2004 226 419
- US-A1- 2005 186 859
- US-A1- 2007 106 283
- US-A1- 2014 026 719
- US-A1- 2014 128 878

## Description

### DOMAINE TECHNIQUE

La présente invention concerne un accessoire de serrage destiné à réaliser le serrage de deux éléments l'un par rapport à l'autre par l'actionnement d'une vis, ledit accessoire comportant une partie dite première, cette partie dite première comportant une première partie d'extrémité formant un embout apte à coopérer avec la tête de vis précitée, et une seconde partie d'extrémité apte à coopérer avec un organe d'actionnement, de telle manière que l'activation de l'organe d'actionnement entraîne le vissage de la vis et le serrage précité, cette première partie étant apte à se briser en deux portions lors de l'atteinte du couple de serrage préconisé, respectivement une première portion comportant la première partie d'extrémité précitée et une seconde portion comportant la seconde partie d'extrémité précitée.

### ETAT DE LA TECHNIQUE ANTERIEURE

Dans le domaine des appareillages électriques, le raccordement électrique des conducteurs, câbles souples ou bien rigides, aux plages de raccordement correspondantes desdits appareillages, est réalisé le plus souvent sur site par des installateurs.
Or, ces installateurs sur site ne disposent pas de clef dynamométrique permettant de réaliser un serrage du conducteur sur la plage.
En effet, ces clefs dynamométriques sont onéreuses, nécessitent de faire l'objet d'un étalonnage une fois par an, ne présentent souvent pas la bonne fourchette de couples correspondant à la gamme concernée des appareillages, et sont susceptibles de faire l'objet de vols.
Dans le cas du raccordement entre le disjoncteur et les câbles de puissance de la ligne à protéger, les bornes des appareils sont parfois serrées sans précision, par une main d'oeuvre de moins en moins qualifiée.
Il en résulte des campagnes de resserrage pour s'assurer du respect des couples préconisés par le constructeur.
On connaît également la possibilité d'utiliser des outils à six pans de quatre millimètres sur plat. Or, ces outils ne permettent pas de garantir le couple de serrage.
On connaît également des vis de raccordement sécables utilisées sur certaines gammes d'appareillages, ces vis intégrant leur propre dispositif de serrage sécable lorsque le couple de serrage est atteint. Après la manœuvre de serrage, lorsque le couple de serrage est atteint, la vis reste en place et la partie ayant servi au serrage est enlevée et jetée.
On connaît le document US 2007/106283 décrivant un accessoire selon le préambule de la revendication 1.

### EXPOSE DE L'INVENTION

La présente invention résout ces problèmes et propose un accessoire de serrage au bon couple, amovible, ne présentant pas de risque de chute d'objet dans le tableau, et permettant d'être utilisé par l'intermédiaire d'un outil couramment présent dans n'importe quelle caisse à outils de l'utilisateur, tel un outil à 6 pans de 4mm.

A cet effet, la présente invention a pour objet un accessoire selon la revendication 1.

Ainsi, l'on obtient grâce à ces caractéristiques, un accessoire de chantier jetable et imperdable, permettant d'assurer le serrage au bon couple de tous les appareils et accessoires d'une même gamme, cet accessoire pouvant être actionné au moyen de n'importe quel outil banal, par exemple à 6 pans, disponible sur le site.
Selon une caractéristique particulière, cet accessoire comporte des moyens dits de pré-vissage prévus en partie sur la première partie et en partie sur la seconde, ces moyens étant aptes à permettre un pré-vissage de l'accessoire par un actionnement manuel de cette seconde partie.

Selon une autre caractéristique, il comporte une collerette de saisie en saillie sur la surface extérieure de ladite seconde partie et s'étendant sensiblement perpendiculairement à ladite surface, cette collerette de saisie permettant à la fois de pré-visser le conducteur à la main et d'extraire l'accessoire des appareillages lorsque le couple de serrage préconisé est atteint.

Selon une caractéristique particulière, cette collerette est venue de matière avec la seconde partie.

Selon une autre caractéristique, la première partie de l'accessoire est réalisée en un matériau métallique.

Selon une autre caractéristique, la seconde partie de l'accessoire est réalisée en une matière plastique.

Selon une autre caractéristique, cette seconde partie comporte une zone sur laquelle est gravée la valeur du couple de serrage correspondant au point de rupture de la première partie et/ou est représentée une couleur représentative de ce couple.

Selon une autre caractéristique, la valeur du couple de serrage correspondant au point de rupture est de 9Nm+/-0,5 ou 5Nm+/-0,5.

Selon une autre caractéristique, la valeur du couple de pré-vissage est d'environ 1Nm.

Selon une autre caractéristique, les moyens de maintien précités comportent au moins deux crochets prévus sur la surface intérieure de la seconde partie (respectivement la surface extérieure de la première partie), lesdits crochets étant aptes à coopérer avec des évidements de forme complémentaire prévus sur la surface extérieure de la première partie (respectivement sur la surface intérieure de la seconde partie).

Selon une autre caractéristique, ces crochets et leurs évidements correspondants sont au nombre de trois et sont équirépartis autour de l'axe de l'accessoire.

Selon une autre caractéristique, ces moyens de pré-vissage comportent au moins deux nervures (ou portions de surfaces lisses) prévue(s) sur la surface intérieure de la seconde partie, ces deux nervures (ou portions de surface lisse) étant destinées à coopérer avec deux portions de surface lisse (ou respectivement deux nervures) située(s) en regard de ces nervures (ou portions de surface lisses), et appartenant à la surface extérieure de la première partie.

Selon une autre caractéristique, ces nervures sont au nombre de trois et sont équiréparties autour de l'axe de l'accessoire.

Selon une autre caractéristique, la première partie comporte une zone située entre les deux parties d'extrémités précitées comportant une rainure annulaire, cette zone étant apte à se casser à l'atteinte du bon couple de serrage.

Selon une autre caractéristique, cette zone est située entre la seconde partie d'extrémité précitée et la collerette précitée.

Selon une caractéristique particulière, l'embout précité présente une forme extérieure comportant six pans aptes à coopérer avec une forme complémentaire en creux prévue dans la tête de vis.

Selon une autre caractéristique, l'organe d'actionnement comporte un embout présentant une forme extérieure à six pans apte à coopérer avec un orifice de forme complémentaire prévu dans la seconde partie d'extrémité de la première partie.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en coupe axiale d'un accessoire selon une réalisation particulière de l'invention,
- Les figures 2 et 3 sont deux vues en perspective, selon deux orientations différentes, du même accessoire,
- Les figures 4 et 5 sont deux vues illustrant en perspective chacune deux accessoires selon l'invention, ces deux figures correspondant respectivement à deux couples de serrage différents, les deux accessoires de chaque figure comportant respectivement deux marquages différents correspondant à deux normes différentes,

- La figure 6 est une vue partielle en coupe, d'une partie d'extrémité de l'accessoire,
- La figure 7 est une vue partielle en coupe, de cette même partie d'extrémité, sans la partie intérieure ou vis de l'accessoire,
- Les figures 8 et 9 illustrent respectivement dans une vue partielle en coupe, deux réalisations particulières de cette partie intérieure ou vis, ces deux réalisations correspondant respectivement à deux valeurs différentes de couple de serrage,
- La figure 10 est une vue de dessus de la figure 6,
- La figure 11 est une vue partielle en perspective, illustrant les différentes étapes permettant de réaliser le raccordement d'une cosse sertie sur une plage de raccordement, au moyen d'un accessoire selon l'invention, et
- La figure 12 est une vue partielle en perspective, illustrant les différentes étapes permettant de réaliser le serrage d'une vis de borne, au moyen d'un accessoire selon l'invention.

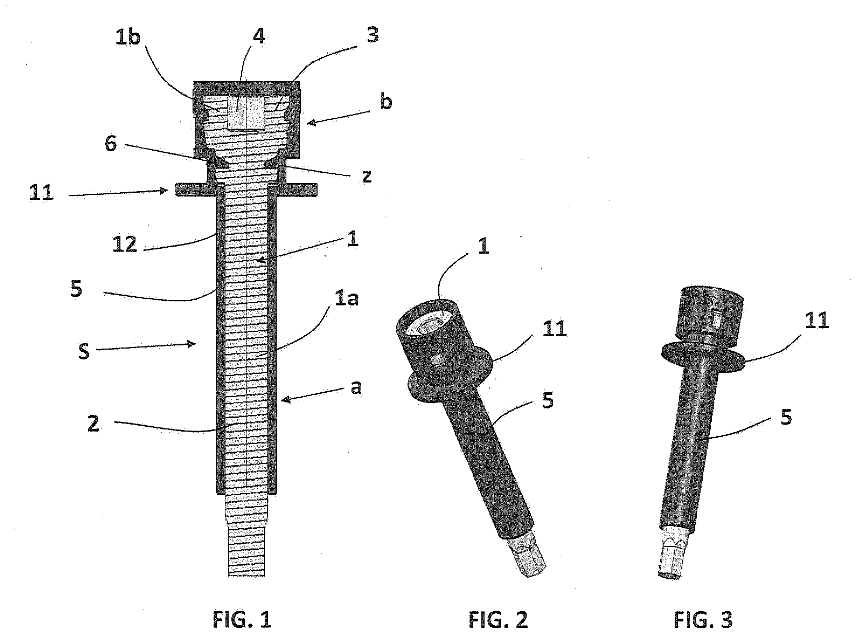

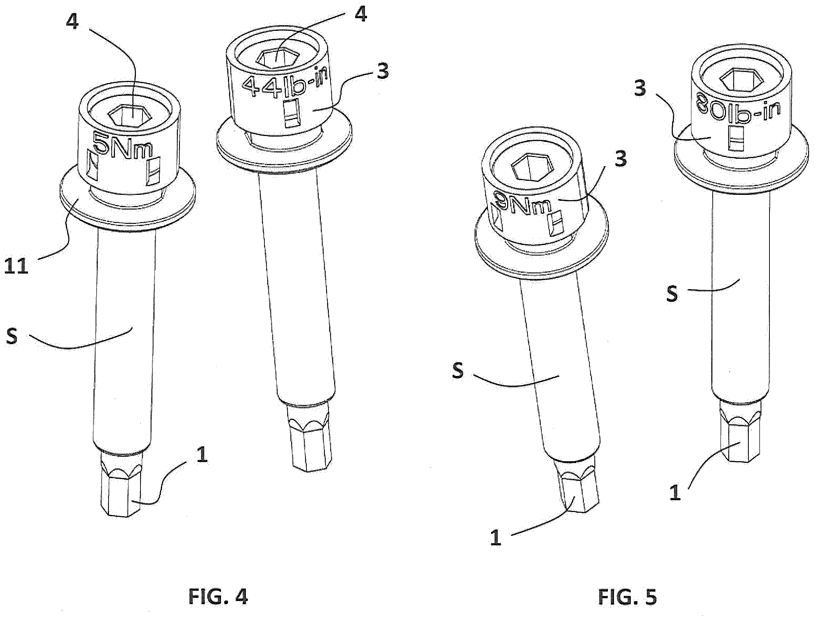

Sur les figures 1 à 9, on voit un accessoire de serrage S selon une réalisation particulière de l'invention, ledit accessoire étant destiné à être utilisé par un installateur sur site afin de réaliser le raccordement électrique entre un conducteur tel un câble 16 et la plage de raccordement d'un appareil de protection électrique tel un disjoncteur D.

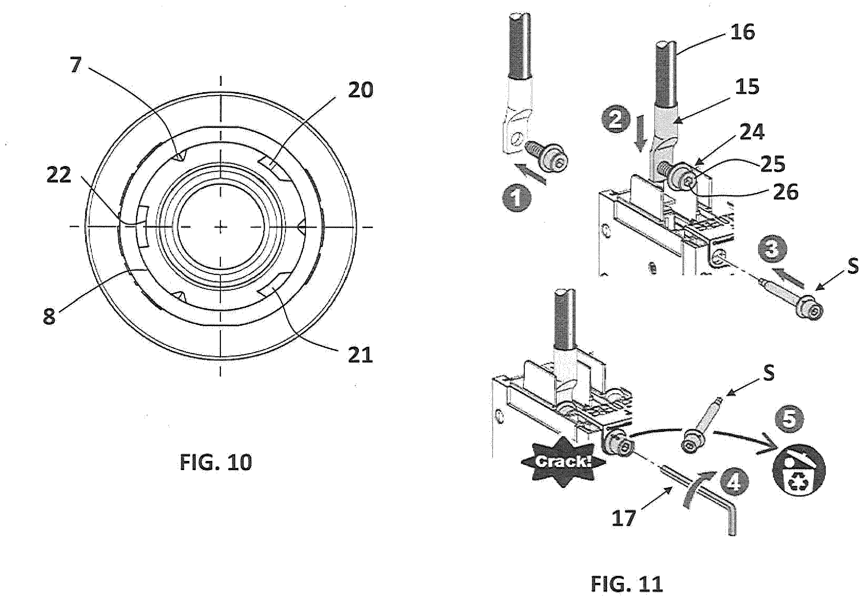

Sur les figures 1 à 12, cet accessoire S comporte une première partie 1 comportant une première partie d'extrémité a, dite embout 2, destinée à être introduite dans une partie en creux 26 de forme complémentaire prévue dans la tête 25 d'une vis de serrage 24 (fig.11), telle la vis 27b d'une borne de serrage 27, et une seconde partie d'extrémité b, dite tête d'accessoire 3 destinée à coopérer avec un organe d'actionnement tel une clé 17 ou un tournevis. A cet effet, la tête d'accessoire 3 comporte un orifice 4 présentant une forme complémentaire à la forme extérieure de la partie d'extrémité de l'organe d'actionnement, de manière à permettre l'entraînement de l'accessoire S en rotation par l'organe d'actionnement 17. Avantageusement, ces deux formes sont constituées chacune de six pans plats.
Avantageusement également, la surface extérieure de l'embout 2 ainsi que la surface intérieure de la partie en creux 26 de la tête 25 de la vis de serrage 24 sont également constituées de quatre pans plats.

Ainsi, cette tête d'accessoire 3 est destinée à permettre la préhension par un installateur, ainsi que l'actionnement au moyen d'un outil tel une clef 17 ou un tournevis à six pans, par ce même installateur, afin d'entraîner la vis 24 en rotation dans le but de réaliser le vissage précité, l'outil étant introduit dans l'orifice précité 4 de forme correspondante prévu dans la tête de l'accessoire 3.
Cet accessoire S comporte également une seconde partie 5 montée serrée autour de la première partie 1 de manière à envelopper la tête de l'accessoire 3 ainsi qu'une partie de l'embout 2 à l'exception de sa partie d'extrémité libre située du côté opposé à la tête de l'accessoire 3, à la manière d'un manchon.

Avantageusement, cette première partie 1 est réalisée en un matériau métallique, tandis que la seconde partie 5 est réalisée en une matière plastique.

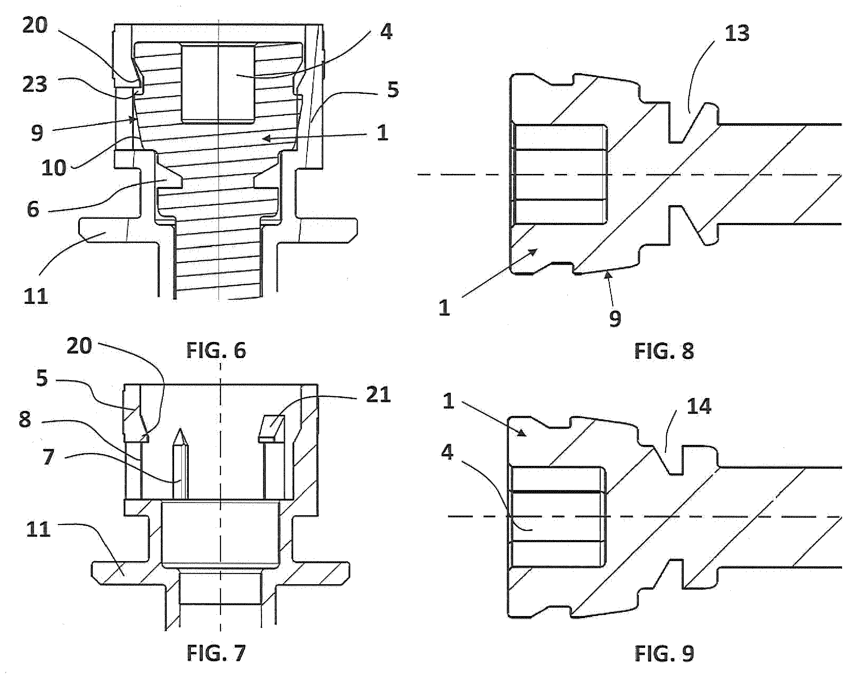

Cette première partie 1 de l'accessoire est apte à se briser en deux portions 1a,1b respectivement première et seconde, lors du vissage réalisé par la mise en service de l'organe d'actionnement 17, lorsque la course de vissage a atteint la valeur correspondant au couple de serrage souhaité. Cette brisure a lieu en une zone z située entre la tête d'accessoire 3 et l'embout 2, cette zone z comportant un enlèvement de matière 6 prévu à cet effet de manière à affaiblir l'embout 2 à cet endroit et faciliter la brisure. Tel qu'illustré sur les figures 8 et 9, l'enlèvement de matière 6 réalisé sous la tête 3 de l'accessoire pourra être réalisé de manière différente en fonction du couple de serrage à partir duquel l'accessoire S est susceptible de se briser.
Ainsi, sur la figure 8, cet enlèvement de matière 6 sera réalisé sous la forme d'une rainure 13 usinée à droite pour un couple de serrage de 5Nm, et sous la forme d'une rainure 14 présentant un usinage réalisé à gauche pour un couple de serrage de 9Nm.

Tel que plus particulièrement illustré sur les figures 6 et 7, cet accessoire 5 comporte également des moyens de maintien 20,21,23 prévus en partie sur la première partie 1 et en partie sur la seconde partie 5, ces moyens étant aptes à retenir la première portion 1a de la première partie 1 à l'intérieur de la seconde partie 5, après la brisure lorsque la première portion 1a continue à tourner sous l'action de l'organe d'actionnement.

Selon cette réalisation particulière illustrée, ces moyens de maintien comportent trois crochets 20,21,22 prévus sur la surface intérieure 8 de la seconde partie 5, lesdits crochets étant aptes à coopérer avec des évidements de forme correspondante 23 prévus sur la surface extérieure 10 de la première partie 1.

Cet accessoire S comporte également des moyens 7 à 10 pour permettre de réaliser un pré-vissage de la vis de serrage 24 avant de réaliser le vissage effectif, de manière à faciliter et rendre plus rapide la manœuvre de raccordement.
Tel que plus particulièrement visible sur la figure 7, ces moyens comportent trois nervures 7 prévues sur la surface intérieure 8 de la deuxième partie 5, ces nervures 7 étant destinées à coopérer avec des portions lisses 9 prévues en regard de ces nervures sur la surface extérieure 10 de la première partie 1 de manière à réaliser un pincement de cette première partie 1 par la seconde 5, ce pincement étant apte à solidariser ces deux parties en rotation, lors de l'actionnement de l'accessoire S en rotation manuellement. On notera qu'avantageusement, ces nervures 7 sont équiréparties autour de l'axe X de l'accessoire S. On notera que la situation pourra être inversée, en ce sens que les nervures 7 pourront être prévues sur la première partie 1 et coopérer avec des portions lisses correspondantes 9 prévues sur la seconde partie 5.
On notera que la valeur du couple de prévissage sera avantageusement de 1Nm.
Avantageusement, ce prévissage sera facilité par la présence d'une collerette 11 sur la surface extérieure 12 de la seconde partie 5 et s'étendant sensiblement perpendiculairement à cette partie, cette collerette de saisie 11 permettant à la fois de pré-visser le conducteur à la main et d'extraire l'accessoire brisé des appareillages.

Ainsi, en fonctionnement, l'accessoire S selon l'invention est introduit dans l'orifice 26 de la vis de serrage 24 par l'intermédiaire de son embout 2. Puis, l'on procède à un prévissage du conducteur en agissant sur la collerette 11 au moyen de deux mains.
Puis, l'on réalise le serrage au moyen d'un outil 17 introduit dans l'orifice 4 prévu dans la tête 3 de l'accessoire S jusqu'à l'atteinte du couple préconisé par le constructeur d'appareillage, après quoi l'accessoire se brise au niveau de la section sécable de la zone z de saisie.
Après quoi, l'accessoire brisé S est retiré des appareils par l'intermédiaire de la collerette de saisie 11, puis jeté, les deux portions 1a,1b de la première partie 1 de l'accessoire S restant à l'intérieur de la seconde partie 5 grâce à la pression exercée par la seconde partie 5 de l'accessoire S sur la première 1.
La figure 11 illustre les différentes étapes du raccordement d'un câble 16 sur la plage de raccordement d'un appareil par l'intermédiaire d'une cosse sertie 15 sur le câble 16, au moyen d'un accessoire S selon l'invention.

En -1-, la vis de serrage 24 ayant été introduite dans un orifice de la cosse 15, cet ensemble est introduit en-2- dans un logement du boîtier B de l'appareil de manière que la cosse 15 soit amenée en appui sur la plage de raccordement, après quoi la vis 24 est introduite dans un orifice prévu dans la plage de raccordement, puis vissée dans un écrou (non visible) placé derrière cette plage.
Puis, l'on introduit en -3- l'embout 2 de l'accessoire S dans l'orifice 26 prévu à cet effet dans la vis de serrage 24. Puis, l'on réalise un prévissage manuel de l'accessoire S, ce prévissage permettant un maintien de la vis 24 par rapport à l'appareil. Puis, l'on réalise -en 4- le vissage de l'accessoire S au moyen d'une clef à six pans 17 coopérant avec l'orifice 4 de forme correspondante prévu dans l'accessoire S jusqu'au point de rupture de la première partie 1 de l'accessoire S. Après quoi, l'accessoire constitué par la seconde partie 5 de l'accessoire S et les deux portions brisées 1a, 1b de l'accessoire sont retirés en -5- du boîtier, puis jetés.

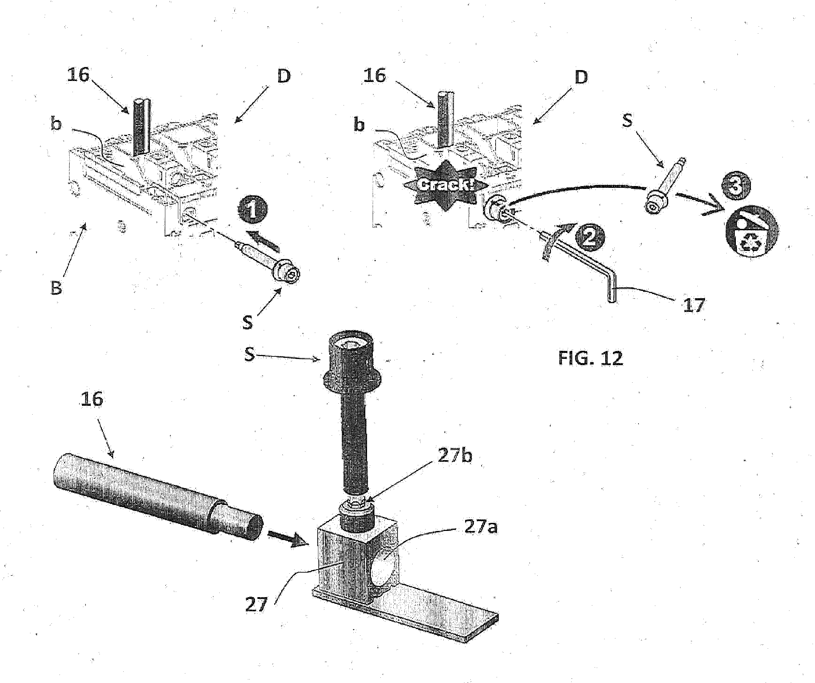

Sur la figure 12, l'on réalise le raccordement d'un câble 16 avec la plage de raccordement d'un appareil au moyen d'une vis de borne 27b.
Tout d'abord, le câble 16 est introduit dans l'ouverture 27a de la borne 27. Après quoi en -1-, l'accessoire S est introduit dans un orifice du boîtier B de l'appareil, puis introduit par son embout 2 dans l'orifice 26 de la vis de borne 27b.
Puis, l'on réalise un prévissage manuel du conducteur, suivi d'un vissage en -2- au moyen d'un outil à six pans introduit dans l'ouverture prévue à cet effet dans l'accessoire S. Puis, lorsque le couple de serrage est atteint et la brisure réalisée, l'ensemble de l'accessoire S est retiré de l'orifice du boîtier et jeté en -3-.
Ainsi, après la brisure, les dernières portions 1a et 1b de l'accessoire S sont maintenues dans la seconde partie 5 de l'accessoire S grâce à la présence des moyens de maintien 20,21,22,23.

On a donc réalisé selon l'invention un accessoire de chantier jetable destiné aux installateurs sur site, cet accessoire restant d'une seule pièce de manière à éviter les chutes d'objets métalliques dans le tableau.

Cet accessoire permet le serrage au bon couple par l'intermédiaire de n'importe quel outil à 6 pans de 4mm de largeur présent dans la caisse à outils de l'utilisateur.
Il permet de réaliser également un pré-vissage du câble à serrer, lors de sa mise en place, à une valeur de 1Nm environ, cela permettant un travail rapide et aisé, à deux mains.
Cet accessoire permet d'équiper toute une gamme d'appareillages électriques, d'un système de serrage au bon couple.

## Revendications

1. Accessoire de serrage destiné à réaliser le serrage de deux éléments l'un par rapport à l'autre par l'actionnement d'une vis (24), ledit accessoire S comportant une partie dite première (1), cette partie dite première comportant une première partie d'extrémité a formant un embout (2) apte à coopérer avec la tête (25) de vis précitée (24), et une seconde partie d'extrémité b apte à coopérer avec un organe d'actionnement (17), de telle manière que l'activation de l'organe d'actionnement (17) entraîne le vissage de la vis (24) et le serrage précité, cette première partie (1) étant apte à se briser en deux portions lors de l'atteinte du couple de serrage préconisé, respectivement une première portion (1a) comportant la première partie d'extrémité précitée a et une seconde portion (1b) comportant la seconde partie d'extrémité précitée b, **caractérisé en ce qu'**il comporte une seconde partie (5) montée serré autour de la première partie (1), des moyens de maintien (20,21,22,23) prévus en partie sur la première partie (1) et en partie sur la seconde partie (5) et étant aptes à retenir la première portion (1a) et la seconde portion (1b) de la première partie (1) à l'intérieur de la seconde partie (5) de l'accessoire S, de manière à empêcher que ces première et seconde portions (1a, 1b) ne sortent de cette seconde partie (5) de l'accessoire après la brisure de la première partie, l'ensemble comprenant la première portion et la seconde portion de la première partie précitée et la seconde partie précitée formant un accessoire de serrage jetable.

2. Accessoire selon la revendication 1, **caractérisé en ce qu'**il comporte des moyens dits de pré-vissage (7,8,9,10) prévus en partie sur la première partie (1) et en partie sur la seconde (5), ces moyens étant aptes à permettre un pré-vissage de l'accessoire S par un actionnement manuel de cette seconde partie (5).

3. Accessoire selon la revendication 1 ou 2, **caractérisé en ce qu'**il comporte une collerette de saisie (11) en saillie sur la surface extérieure (10) de ladite seconde partie (5) et s'étendant sensiblement perpendiculairement à ladite surface, cette collerette de saisie (11) permettant à la fois de pré-visser le conducteur (16) à la main et d'extraire l'accessoire S des appareillages lorsque le couple de serrage préconisé est atteint.

4. Accessoire selon la revendication 3, **caractérisé en ce que** cette collerette (11) est venue de matière avec la seconde partie (5).

5. Accessoire selon l'une quelconque des revendications précédentes, **caractérisé en ce que** la première partie (1) de l'accessoire S est réalisée en un matériau métallique.

6. Accessoire selon l'une quelconque des revendications précédentes, **caractérisé en ce que** la seconde partie (5) de l'accessoire S est réalisée en une matière plastique.

7. Accessoire selon l'une quelconque des revendications précédentes, **caractérisé en ce que** cette seconde partie (5) comporte une zone sur laquelle est gravée la valeur du couple de serrage correspondant au point de rupture de la première partie (1) et/ou est représentée une couleur représentative de ce couple.

8. Accessoire selon l'une quelconque des revendications précédentes, **caractérisé en ce que** la valeur du couple de serrage correspondant au point de rupture est de 9Nm+/-0,5 ou 5Nm+/-0,5.

9. Accessoire selon l'une quelconque des revendications 2 à 8, **caractérisé en ce que** la valeur du couple de pré-vissage est d'environ 1Nm.

10. Accessoire selon l'une quelconque des revendications précédentes, **caractérisé en ce que** les moyens de maintien précités (20 à 23) comportent au moins deux crochets (20 à 22) prévus sur la surface intérieure (8) de la seconde partie (5) (respectivement la surface extérieure (10) de la première partie (1)), lesdits crochets (20,21,22) étant aptes à coopérer avec des évidements de forme complémentaire (23) prévus sur la surface extérieure (10) de la première partie (1) (respectivement sur la surface intérieure (8) de la seconde partie(5)).

11. Accessoire selon la revendication 10, **caractérisé en ce que** ces crochets (20,21,22) et leurs évidements correspondants (23) sont au nombre de trois et sont équirépartis autour de l'axe X de l'accessoire S.

12. Accessoire selon l'une quelconque des revendications 2 à 11, **caractérisé en ce que** ces moyens de pré-vissage (7 à 10) comportent au moins deux nervures (7) (ou portions de surfaces lisses) (9) prévue(s) sur la surface intérieure (8) de la seconde partie (5), ces deux nervures (7) (ou portions de surface lisse (9)) étant destinées à coopérer avec deux portions de surface lisse (ou respectivement deux nervures) située(s) en regard de ces nervures (ou portions de surface lisses), et appartenant à la surface extérieure (10) de la première partie (1).

13. Accessoire selon la revendication 12, **caractérisé en ce que** ces nervures (7) sont au nombre de trois et sont équiréparties autour de l'axe X de l'accessoire S.

14. Accessoire selon l'une quelconque des revendications précédentes, **caractérisé en ce que** la première partie (1) comporte une zone z située entre les deux parties d'extrémités précitées (a,b) et comportant une rainure annulaire (13,14), cette zone z étant apte à se casser à l'atteinte du bon couple de serrage.

15. Accessoire selon les revendications 3 et 14, **caractérisé en ce que** cette zone z est située entre la seconde partie d'extrémité précitée (b) et la collerette précitée (11).

16. Accessoire selon l'une quelconque des revendications précédentes, **caractérisé en ce que** l'embout précité (2) présente une forme extérieure comportant six pans aptes à coopérer avec une forme complémentaire en creux (26) prévue dans la tête (25) de vis (24).

17. Accessoire selon l'une quelconque des revendications précédentes, **caractérisé en ce que** l'organe d'actionnement (17) comporte un embout (2) présentant une forme extérieure à six pans apte à coopérer avec un orifice (4) de forme complémentaire prévu dans la seconde partie d'extrémité (b,3) de la première partie (1).

## Patentansprüche

1. Anziehvorrichtung, die dazu bestimmt ist, durch das Betätigen einer Schraube (24) das Anziehen von zwei Elementen relativ zueinander durchzuführen, wobei die Vorrichtung S einen so genannten ersten Teil (1) umfasst, wobei dieser sogenannte erste Teil einen ersten Endteil a, der einen Ansatz (2) bildet, der fähig ist, mit dem Kopf (25) der vorgenannten Schraube (24) zusammenzuwirken, und einen zweiten Endteil b, der fähig ist, mit einem Betätigungsorgan (17) zusammenzuwirken, umfasst, derart, dass das Aktivieren des Betätigungsorgans (17) das Verschrauben der Schraube (24) und das vorgenannte Anziehen bewirkt, wobei dieser erste Teil (1) fähig ist, bei Erreichen des empfohlenen Anziehdrehmoments in zwei Teile zu zerbrechen, jeweils in einen ersten Abschnitt (1a), der den vorgenannten ersten Endteil a umfasst, und einen zweiten Abschnitt (1b), der den vorgenannten zweiten Endteil b umfasst, **dadurch gekennzeichnet**, sie Folgendes umfasst: einen zweiten Teil (5), der mit Presssitz um den ersten Teil (1) montiert ist, Mittel zum Halten (20, 21, 22, 23), die teilweise an dem ersten Teil (1) und teilweise an dem zweiten Teil (5) vorgesehen sind und fähig sind, den ersten Abschnitt (1a) und den zweiten Abschnitt (1b) des ersten Teils (1) im Inneren des zweiten Teils (5) der Vorrichtung S zurückzuhalten, um zu verhindern, dass dieser erste und zweite Abschnitt (1a, 1b) nach dem Zerbrechen des ersten Teils aus diesem zweiten Teil (5) der Vorrichtung herausfallen, wobei die Einheit, die den ersten Abschnitt und den zweiten Abschnitt des vorgenannten ersten Teils und den vorgenannten zweiten Teil beinhaltet, eine wegwerfbare Anziehvorrichtung bildet.

2. Vorrichtung nach Anspruch 1, **dadurch gekennzeichnet, dass** sie sogenannte Vorverschraubungsmittel (7, 8, 9, 10) umfasst, die teilweise an dem ersten Teil (1) und teilweise an dem zweiten (5) vorgesehen sind, wobei diese Mittel fähig sind, eine Vorverschraubung der Vorrichtung S durch ein manuelles Betätigen dieses zweiten Teils (5) zu ermöglichen.

3. Vorrichtung nach Anspruch 1 oder 2, **dadurch gekennzeichnet, dass** sie einen Greifkragen (11), der an der Außenfläche (10) des zweiten Teils (5) vorspringt und sich im Wesentlichen senkrecht zu der Fläche erstreckt, umfasst, wobei dieser Greifkragen (11) gleichzeitig das Vorverschrauben des Leiters (16) per Hand und das Herausziehen der Vorrichtung S aus den Geräten, wenn das empfohlenen Anziehdrehmoment erreicht ist, ermöglicht.

4. Vorrichtung nach Anspruch 3, **dadurch gekennzeichnet, dass** dieser Kragen (11) aus Werkstoff des zweiten Teils (5) gebildet ist.

5. Vorrichtung nach einem der vorhergehenden Ansprüche, **dadurch gekennzeichnet, dass** der erste Teil (1) der Vorrichtung S aus einem metallischen Material hergestellt ist.

6. Vorrichtung nach einem der vorhergehenden Ansprüche, **dadurch gekennzeichnet, dass** der zweite Teil (5) der Vorrichtung S aus einem Kunststoff hergestellt ist.

7. Vorrichtung nach einem der vorhergehenden Ansprüche, **dadurch gekennzeichnet, dass** dieser zweite Teil (5) einen Bereich umfasst, auf dem der Wert des Anziehdrehmoments, der dem Sollbruchpunkt des ersten Teils (1) entspricht, eingraviert ist und/oder eine für dieses Drehmoment repräsentative Farbe dargestellt ist.

8. Vorrichtung nach einem der vorhergehenden Ansprüche, **dadurch gekennzeichnet, dass** der Wert des Anziehdrehmoments, der dem Sollbruchpunkt entspricht, 9 Nm+/-0,5 oder 5 Nm+/-0,5 beträgt.

9. Vorrichtung nach einem der Ansprüche 2 bis 8, **dadurch gekennzeichnet, dass** der Wert des Vorverschraubungsdrehmoments ungefähr 1 Nm beträgt.

10. Vorrichtung nach einem der vorhergehenden Ansprüche, **dadurch gekennzeichnet, dass** die vorgenannten Haltemittel (20 bis 23) mindestens zwei Haken (20 bis 22) umfassen, die an der Innenfläche (8) des zweiten Teils (5) (bzw. an der Außenfläche (10) des ersten Teils (1)) vorgesehen sind, wobei die Haken (20, 21, 22) fähig sind, mit komplementären Aussparungen (23), die an der Außenfläche (10) des ersten Teils (1) (bzw. an der Innenfläche (8) des zweiten Teils (5)) vorgesehen sind, zusammenzuwirken.

11. Vorrichtung nach Anspruch 10, **dadurch gekennzeichnet, dass** die Anzahl dieser Haken (20, 21, 22) und ihrer entsprechenden Aussparungen (23) drei ist und diese gleichmäßig um die Achse X der Vorrichtung S verteilt sind.

12. Vorrichtung nach einem der Ansprüche 2 bis 11, **dadurch gekennzeichnet, dass** diese Vorverschraubungsmittel (7 bis 10) mindestens zwei Rippen (7) (oder Abschnitte mit glatten Oberflächen) (9), die an der Innenfläche (8) des zweiten Teils (5) vorgesehen sind, umfassen, wobei diese Rippen (7) (oder Abschnitte mit glatter Oberfläche (9)) dazu bestimmt sind, mit zwei Abschnitten mit glatter Oberfläche (oder bzw. zwei Rippen), die sich gegenüber diesen Rippen (oder Abschnitten mit glatter Oberfläche) befinden und zu der Außenfläche (10) des ersten Teils (1) gehören, zusammenzuwirken.

13. Vorrichtung nach Anspruch 12, **dadurch gekennzeichnet, dass** die Anzahl dieser Rippen (7) drei ist und diese gleichmäßig um die Achse X der Vorrichtung S verteilt sind.

14. Vorrichtung nach einem der vorhergehenden Ansprüche, **dadurch gekennzeichnet, dass** der erste Teil (1) einen Bereich z umfasst, der sich zwischen den zwei vorgenannten Endteilen (a, b) befindet und eine ringförmige Nut (13, 14) umfasst, wobei dieser Bereich z fähig ist, bei Erreichen des richtigen Anziehdrehmoments zu brechen.

15. Vorrichtung nach den Ansprüchen 3 und 14, **dadurch gekennzeichnet, dass** sich dieser Bereich z zwischen dem vorgenannte zweiten Endteil (b) und dem vorgenannten Kragen (11) befindet.

16. Vorrichtung nach einem der vorhergehenden Ansprüche, **dadurch gekennzeichnet, dass** der vorgenannte Ansatz (2) eine Außenform mit einem Sechskant aufweist, die fähig ist, mit einer komplementären Hohlform (26), die in dem Kopf (25) der Schraube (24) vorgesehen ist, zusammenzuwirken.

17. Vorrichtung nach einem der vorhergehenden Ansprüche, **dadurch gekennzeichnet, dass** das Betätigungsorgan (17) einen Ansatz (2) umfasst, der eine Außenform mit einem Sechskant aufweist, die fähig ist, mit einer komplementären Öffnung (4), die in dem zweiten Endteil (b, 3) des ersten Teils (1) vorgesehen ist, zusammenzuwirken.

## Claims

1. Item for tightening intended to realize the tightening of two elements relative to one another by actuation of a screw (24), said item S comprising a part known as the first part (1), this part known as the first part comprising a first end part a forming an end piece (2) able to engage with the head (25) of the abovementioned screw (24), and a second end part b able to engage with an actuating member (17), such that activation of the actuating member (17) causes turning of the screw (24) and the abovementioned tightening, this first part (1) being able to break into two portions upon reaching the recommended tightening torque, namely a first portion (1a) comprising the abovementioned first end part a and a second portion (1b) comprising the abovementioned second end part b, respectively, **characterized in that** it comprises a second part (5) mounted tightly about the first part (1), holding means (20, 21, 22, 23) that are provided in part on the first part (1) and in part on the second part (5) and are able to retain the first portion (1a) and the second portion (1b) of the first part (1) inside the second part (5) of the item S, in order to prevent these first and second portions (1a, 1b) from leaving this second part (5) of the item after the breaking of the first part, the assembly comprising the first portion and the second portion of the abovementioned first part and the abovementioned second part forming a disposable item for tightening.

2. Item according to Claim 1, **characterized in that** it comprises means known as pre-screwing means (7, 8, 9, 10) provided partly on the first part (1) and partly on the second (5), these means being able to allow pre-screwing of the item S by manual actuation of this second part (5).

3. Item according to Claim 1 or 2, **characterized in that** it comprises a gripping collar (11) protruding from the outer surface (10) of said second part (5) and extending substantially perpendicularly to said surface, this gripping collar (11) making it possible to both pre-screw the conductor (16) by hand and to extract the item S from the switchgear when the recommended tightening torque is reached.

4. Item according to Claim 3, **characterized in that** this collar (11) is made in one piece with the second part (5).

5. Item according to any one of the preceding claims, **characterized in that** the first part (1) of the item S is made of a metallic material.

6. Item according to any one of the preceding claims, **characterized in that** the second part (5) of the item S is made of a plastics material.

7. Item according to any one of the preceding claims, **characterized in that** this second part (5) comprises a zone on which the value of the tightening torque corresponding to the breaking point of the first part (1) is etched and/or a colour representative of this torque is shown.

8. Item according to any one of the preceding claims, **characterized in that** the value of the tightening torque corresponding to the breaking point is 9 Nm+/-0.5 or 5 Nm+/-0.5.

9. Item according to any one of Claims 2 to 8, **characterized in that** the value of the pre-screwing torque is approximately 1 Nm.

10. Item according to any one of the preceding claims, **characterized in that** the abovementioned holding means (20 to 23) comprise at least two hooks (20 to 22) provided on the inner surface (8) of the second part (5) (or on the outer surface (10) of the first part (1), respectively), said hooks (20, 21, 22) being capable of co-operating with voids of complementary form (23) provided on the outer surface (10) of the first part (1) (or on the inner surface (8) of the second part (5), respectively).

11. Item according to Claim 10, **characterized in that** there are three of these hooks (20, 21, 22) and of their corresponding voids (23) and they are regularly distributed around the axis X of the item S.

12. Item according to any one of Claims 2 to 11, **characterized in that** these pre-screwing means (7 to 10) comprise at least two ribs (7) (or smooth surface portions) (9) provided on the inner surface (8) of the second part (5), these two ribs (7) (or smooth surface portions (9)) being intended to co-operate with two smooth surface portions (or two ribs, respectively) situated facing these ribs (or smooth surface portions), and belonging to the outer surface (10) of the first part (1).

13. Item according to Claim 12, **characterized in that** there are three of these ribs (7) and they are regularly distributed around the axis X of the item S.

14. Item according to any one of the preceding claims, **characterized in that** the first part (1) comprises a zone z situated between the abovementioned two end parts (a, b) and comprising an annular groove (13, 14), this zone z being able to be broken on reaching the correct tightening torque.

15. Item according to Claims 3 and 14, **characterized in that** this zone z is situated between the abovementioned second end part (b) and the abovementioned collar (11).

16. Item according to any one of the preceding claims, **characterized in that** the abovementioned end piece (2) has an outer form comprising six facets capable of co-operating with a complementary recessed form (26) provided in the head (25) of the screw (24).

17. Item according to any one of the preceding claims, **characterized in that** the actuating member (17) comprises an end piece (2) having an outer form with six facets capable of co-operating with an orifice (4) of complementary form provided in the second end part (b, 3) of the first part (1).
